# EUROPÄISCHE PATENTANMELDUNG

(11) **EP 3 306 341 A1**
(43) Veröffentlichungstag der Anmeldung: **11.04.2018**
(21) Anmeldenummer: 17191689.3
(22) Anmeldetag: 18.09.2017
(51) Int. Cl.: G01S 7/497, G01S 7/486, G01S 17/89

(54) **OPTOELEKTRONISCHER SENSOR UND VERFAHREN ZUR OPTISCHEN ERFASSUNG EINES ÜBERWACHUNGSBEREICHS**

(30) Priorität: 04.10.2016 DE 102016118758
(71) Anmelder: Sick AG, 79183 Waldkirch (DE)
(72) Erfinder: Hofmann, Christoph, 79194 Gundelfingen (DE); Hammes, Markus, 79117 Freiburg (DE); Krämer, Joachim, 79189 Bad Krozingen (DE); Sigmund, Jörg, 79341 Kenzingen (DE)

(57) **Zusammenfassung**

Es wird ein optoelektronischer Sensor (10), insbesondere eine 3D-Kamera, zur Erfassung eines Überwachungsbereichs (12) angegeben, wobei der Sensor (10) einen Bildsensor (16a-b), eine Beleuchtungseinheit (20), um den Überwachungsbereich (12) zumindest teilweise mit einem Beleuchtungsfeld (26) zu beleuchten, und eine Beleuchtungssteuerung (28) aufweist, die für eine Leistungsanpassung der Beleuchtungseinheit (20) zur Einhaltung von Schutzanforderungen ausgebildet ist. Der Sensor (10) weist weiterhin einen entfernungsmessenden optoelektronischen Zusatzsensor (38) auf, der prüft, in welcher Entfernung sich ein Objekt (42) in dem Beleuchtungsfeld (26) befindet, und die Beleuchtungssteuerung (28) nimmt die Leistungsanpassung in Abhängigkeit der von dem Zusatzsensor (38) gemessenen Entfernung vor.

## Beschreibung

Die Erfindung betrifft einen optoelektronischen Sensor und ein Verfahren zur optischen Überwachung eines Überwachungsbereichs nach dem Oberbegriff von Anspruch 1 beziehungsweise 10.

Zahlreiche optoelektronische Sensoren verwenden eine eigene Laserbeleuchtung. Wegen der Augenschutzanforderungen können aber Laserbeleuchtungen entweder nur mit starken Einschränkungen der optischen Ausgangsleistung betrieben werden, oder sie müssen nach Lasernorm in höhere Schutzklassen, beispielsweise oberhalb der Klasse 1M in 3R, 3B oder 4 gemäß EN 60825 eingestuft werden. Die strengen Auflagen an den Betrieb der Einrichtung bei höheren Schutzklassen sind meist nicht akzeptabel. Ähnliche Anforderungen können sich auch bei Verwendung anderer Lichtquellen ergeben, wie beispielsweise für LED aus der EN 62471.

3D-Kameras nehmen Bilddaten auf, die auch eine Entfernungsinformation beinhalten und die als dreidimensionale Bilder oder Tiefenkarten bezeichnet werden. Je nach 3D-Erfassung wird eine aktive Beleuchtung für die Sensorfunktion zwingend benötigt oder führt zumindest zu einer besseren Qualität der Bilddaten.

Lichtlaufzeitkameras werten Laufzeiten ihres Sendelichts in den Pixeln ihres Bildsensors aus. Ein bekanntes Verfahren für entsprechende Lichtlaufzeitbildsensoren ist die Photomischdetektion.

Stereoskopische Kamerasysteme nehmen mehrere zweidimensionale Bilder einer Szenerie aus leicht unterschiedlichen Perspektiven auf. In den überlappenden Bildbereichen werden gleiche Strukturen identifiziert und aus der Disparität und den optischen Parametern des Kamerasystems mittels Triangulation Entfernungen berechnet. Stereoskopie kommt prinzipiell als passive Stereoskopie auch ohne eigene Beleuchtung aus. Ist aber die zu überwachende Szenerie kontrastschwach oder weist Bereiche mit wenig Struktur auf, so ist die stereoskopische Auswertung unzuverlässig. Dabei sind zumindest zwei Arten von Fehlern denkbar, nämlich ein Scheitern des Auffindens einander entsprechender Strukturelemente oder eine fehlerhafte Zuordnung. Die Folge sind Lücken in den dreidimensionalen Bildern oder fehlerhafte Berechnungen der Entfernungen. Das kann durch künstliche Struktur einer Musterbeleuchtung verhindert werden. In einer Abwandlung des Stereoskopieprinzips wird nur ein Bild aufgenommen und mit einem bekannten Projektionsmuster korreliert, letztlich also die Verzerrung des Beleuchtungsmusters durch die Konturen in der Szenerie ausgewertet.

Um mit 3D-Kameras hochwertige Bilddaten auch bei größeren Reichweiten zu erzeugen, sollte die Beleuchtung leistungsstark sein. Das gilt besonders bei sicherheitstechnischen Anwendungen, in denen durch die 3D-Kamera eine Gefahrenquelle überwacht und nötigenfalls abgesichert wird. Andererseits möchte man aber nach Möglichkeit eine für den Augenschutz unbedenkliche Laserschutzklasse, beispielsweise Typ 1 beziehungsweise 1M gemäß EN 60825 einhalten. Diese widersprüchlichen Anforderungen sind nicht einfach miteinander zu vereinbaren.

Die DE 10 2009 031 732 B3 beschreibt ein Stereoskopiesystem, welches zunächst mit geringer optischer Ausgangsleistung einen vorläufigen Arbeitsbereich prüft. Nur wenn dort keine unzulässigen Objekte erkannt werden, wird auf eine höhere Laserleistung umgeschaltet. Nachteilig hieran ist, dass zwischen einem Einschalt- und einem Regelbetrieb unterschieden werden muss, was das Verfahren relativ kompliziert macht. Die DE 10 2010 037 744 B3 verfeinert dieses Verfahren, indem während des Einschaltens der Nahbereich auf andere Weise geprüft wird als durch den Stereoalgorithmus des späteren Regelbetriebs. Das Umschalten an sich wird dadurch natürlich nicht vermieden.

Die DE 10 2009 013 735 A1 offenbart einen Sensor für die Überwachung eines Überwachungsbereichs, bei dem der Sensor die auf einem Objekt auftreffende Leistung pro Fläche misst. Bei Detektion eines Objekts wird die Leistung angepasst, um eine Überschreitung eines vorgegebenen Werts zu verhindern. Dies erfordert eine ständige Messung der auftreffenden Strahlungsleistung, die aufwändig und zugleich wegen der Abhängigkeit von nur teilweise bekannten Parametern wie dem Objektabstand und den Remissionseigenschaften des Objekts gemessen werden muss und deshalb entsprechend unzuverlässig ist.

In der US 2007/0001111 A wird ein Laserprojektor offenbart, der zum Personenschutz mit Hilfe von Näherungssensoren Personen innerhalb einer Schutzzone direkt am Projektor erkennt, um in Abhängigkeit von der Geschwindigkeit der Scanbewegung des Projektors und der Rückmeldung der Näherungssensoren die Lichtleistung anzupassen. Die Augenschutzbetrachtung ist aber für eine 3D-Kamera nicht geeignet.

Die GB 2 295 740 A offenbart einen laserbasierten Entfernungsmesser mit einem schwachen und einem starken Laser. Der starke Laser wird nur aktiviert, sofern zuvor mit dem schwachen Laser keine Person detektiert wurde. Auch diese auf einen kollimierten Laser bezogene Augenschutzbetrachtung ist auf 3D-Kameras nicht übertragbar.

In der US 6 661 820 B1 wird ein Projektor für strukturiertes Licht zur Verwendung mit einem Bildsensor vorgestellt. Dabei wird zwar die sichere Laserleistung maximiert, jedoch nicht situativ an die tatsächlich erfassten Objekte angepasst. Damit können nur fixe Annahmen gemacht werden, und Spielräume zur Erhöhung der Lichtleistung bei einer Szenerie mit günstigeren Rahmenbedingungen als diese Annahmen bleiben ungenutzt.

In US 8 290 208 B2 und ähnlich auch US 9 201 501 B2 wird die Leistung eines Laserprojektors angepasst, wenn sich Personen im Projektionsfeld befinden. Dazu wird aber eine ausgesprochen aufwändige Bildanalyse durchgeführt.

Es ist daher Aufgabe der Erfindung, die Leistungsanpassung einer Beleuchtung eines gattungsgemäßen optoelektronischen Sensors zu verbessern.

Diese Aufgabe wird durch einen optoelektronischen Sensor und ein Verfahren zur optischen Überwachung eines Überwachungsbereichs nach Anspruch 1 beziehungsweise 10 gelöst. Der Sensor besitzt eine vorzugsweise divergente Beleuchtungseinheit, um eine ausgedehnte Szenerie einer 3D-Kamera auszuleuchten. Um den Überwachungsbereich einerseits möglichst gut auszuleuchten und eine hohe Reichweite zu erzielen und andererseits Schutzanforderungen wie beispielsweise für Augenschutz zu erfüllen, erfolgt eine situative Leistungsanpassung der Beleuchtungseinheit. Dabei geht die Erfindung von dem Grundgedanken aus, einen Zusatzsensor zu verwenden, um Informationen über mögliche Objekte im Beleuchtungsfeld zu gewinnen, auf die Rücksicht genommen werden sollte. Der Zusatzsensor ist ein eigener zweiter Sensor zusätzlich zu dem Bildsensor und der Beleuchtungseinheit des Hauptsensors, kann aber allgemeine Komponenten wie Versorgung, Gehäuse und eventuell einige optische Elemente mitnutzen. Die Beleuchtungssteuerung passt die Leistung an die gemessene Entfernung eines im Beleuchtungsfeld befindlichen Objekts an. Das schließt den Fall eines objektfreien Beleuchtungsfelds ein, denn dann liefert der Zusatzsensor die Entfernungsinformation, dass etwaige Objekte weiter entfernt sind als seine Messreichweite.

Die Erfindung hat den Vorteil, dass mit der passenden Leistungsanpassung auf eine situative Gefährdungsbeurteilung zum Schutz vor elektromagnetischer Strahlung reagiert wird. Das vermeidet die herkömmliche Auslegung anhand von *worst case* Annahmen, welche die Energiebilanz unnötig limitieren. So kann die Beleuchtungseinheit mit hoher Beleuchtungsleistung betrieben werden, während beispielsweise die Klassifikation als Lasereinrichtung des Typs 1M gemäß DIN EN 60825-1 erhalten bleibt. Zusätzliche Sicherheitsmaßnahmen, wie sie beispielsweise höhere Laserschutzklassen erfordern, müssen nicht ergriffen werden. Eine Einschaltphase mit verringerter Leistung der Beleuchtungseinheit ist nicht erforderlich, der Sensor arbeitet direkt im Regelbetrieb, sofern der unabhängig entfernungsmessende Zusatzsensor kein gefährdetes Objekt detektiert. Es gibt günstige und baukleine entfernungsmessende Zusatzsensoren, die sich einfach in den Sensor oder sogar die Beleuchtungseinheit integrieren oder auch nachrüsten lassen.

Das Beleuchtungsfeld weist bevorzugt einen Bereich auf, in dem ein Auge mit maximaler Leistungsdichte getroffen wird, wobei der Zusatzsensor die Entfernung relativ zu dem Bereich misst. Dieser Bereich befindet sich entgegen dem ersten Anschein keineswegs in kürzester Entfernung, denn dort trifft zwar das Auge insgesamt eine große Lichtmenge, die sich aber auf eine größere Netzhautfläche verteilt. Daher ist es sinnvoll, den gefährlichsten Entfernungsbereich zu bestimmen und die für die Leistungsanpassung genutzten Entfernungen relativ dazu zu messen. Außerdem misst der Zusatzsensor vorzugsweise kollinear beziehungsweise parallel zur Ausbreitungsrichtung der Beleuchtung, damit Objekte am relevanten Ort in relevanter Richtung erfasst werden.

Die Leistungsanpassung erfolgt bevorzugt entsprechend einem zulässigen Höchstwert. Für eine gute Energiebilanz wird nicht nur dafür gesorgt, dass der Höchstwert nicht überschritten, sondern auch zumindest nahezu erreicht und damit die mögliche Beleuchtungsleistung ausgereizt wird. Der Höchstwert wird vorzugsweise aus Bestimmungen für den Augenschutz wie der Norm EN 60825 abgeleitet.

Der Höchstwert ist bevorzugt an die gemessene Entfernung angepasst. Das kann in Form einer Funktion des Höchstwerts in Abhängigkeit von der gemessenen Entfernung erfolgen, wobei diese Funktion kontinuierlich oder diskret sein kann. In der Praxis können schon wenige Stufen einer diskreten Funktion genügen, beispielsweise je ein Höchstwert für nahe Entfernungen, für Entfernungen im Bereich, in dem ein Auge mit maximaler Leistungsdichte getroffen wird, und für größere Entfernungen. Bei Objekten in bestimmten Entfernungen kann die angemessene Reaktion auch eine sofortige Abschaltung der Beleuchtungseinheit sein, d.h. der Höchstwert für diesen Entfernungsbereich Null gesetzt werden.

Die Beleuchtungssteuerung ist bevorzugt dafür ausgebildet, die Beleuchtungseinheit gepulst zu betreiben und die Leistungsanpassung über die Pulswiederholfrequenz, die Pulsamplitude und/oder die Pulslänge zu steuern. Die maßgebliche Größe für eine Schädigung des Auges ist nämlich nicht die momentane, sondern die mittlere integrierte Leistung. Daher muss die Leistungsanpassung nicht notwendig die oder allein die Pulsamplitude nachregeln, sondern kann auch Dauer und Häufigkeit der Pulse als Stellgröße nutzen. Die mittlere optische Ausgangsleistung lässt sich über die Pulsfolgen besonders einfach steuern, und die Leistung kann besser gebündelt werden, möglicherweise synchron zu Empfangszeitfenstern.

Der Zusatzsensor weist bevorzugt einen SPAD-Lichtempfänger auf. SPADs (singlephoton avalanche diode) sind im sogenannten Geiger-Modus betriebene Lawinenphotodioden, die mit einer hohen Biasspannung oberhalb der Durchbruchspannung vorgespannt sind. Dadurch kann bereits ein einzelnes einfallendes Photon den Lawinendurchbruch und damit ein Detektionssignal auslösen. Ein Entfernungsmesser mit einem SPAD-Lichtempfänger kann besonders günstig und bauklein sein, dabei aber weiterhin ausreichend präzise Entfernungsmessungen durchführen.

Der Zusatzsensor weist bevorzugt eine eigene Beleuchtungseinheit auf. Damit kann beispielsweise eine Entfernung mit einem Lichtlaufzeitverfahren gemessen werden. Die eigene Beleuchtungseinheit ist vorzugsweise über ihren gesamten Beleuchtungsbereich augensicher und wird nicht situativ angepasst. Daher ist sie in der Regel schwächer als die Beleuchtungseinheit der 3D-Kamera. Eine geringere Reichweite ist unproblematisch, da in größerer Entfernung das Beleuchtungsfeld ohnehin nicht mehr gefährlich ist, insbesondere wenn es divergent ist.

Die eigene Beleuchtungseinheit weist bevorzugt einen ausgedehnten ring- oder linienförmigen Strahlquerschnitt auf. Bei einer alternativen nur punktuellen Messung überwacht der Zusatzsensor nur einen sehr kleinen Teil des Beleuchtungsfeldes. Das kann durchaus genügen, wenn die kritischen Bereiche lokal im Beleuchtungsfeld konzentriert sind und mit einem oder wenigen punktuellen Messungen überwacht werden. Mit einem größeren Lichtfleck und daher Erfassungsbereich wird aber auch ein entsprechend größerer Teil des Beleuchtungsfeldes überwacht, so dass sich die Situation eines übersehenen Objekts seltener oder gar nicht ergeben kann.

Vorzugsweise sind mehrere Zusatzsensoren vorgesehen. Das ist eine alternative oder zusätzliche Maßnahme, um das Beleuchtungsfeld besser abzudecken. Die Zusatzsensoren können tatsächlich mehrere getrennte Sensoren sein, aber auch eine Anordnung einer Mehrfachlichtquelle, wie eine Laserzeile oder ein VCSEL-Array, mit einer Empfängermatrix kann in diesem Sinne als mehrere Zusatzsensoren gelten. Ähnlich kann die Auswertung zur Bestimmung der Entfernung getrennt oder gemeinsam sein. Die Zusatzsensoren können jeweils wahlweise wie der einzelne Zusatzsensor punktförmig oder mit einem ausgedehnten Strahlquerschnitt messen.

Der als 3D-Kamera ausgestaltete Sensor kann alle bekannten Techniken zur Erfassung von Tiefenkarten nutzen, etwa als Lichtlaufzeitkamera oder als Stereokamera wie einleitend erläutert.

In bevorzugter Weiterbildung ist eine Abschalteinrichtung vorgesehen, welche dafür ausgebildet ist, ein Abschaltsignal an eine überwachte Gefahrenquelle beziehungsweise Maschine auszugeben, falls ein unzulässiger Objekteingriff erfolgt. Ein unzulässiger Objekteingriff kann durch die 3D-Kamera selbst erkannt sein, beispielsweise weil sich ein unbekanntes Objekt in einem Schutzbereich insbesondere zu nahe an der überwachten Maschine befindet. Es kann aber auch sein, dass ein durch den Zusatzsensor erfasstes Objekt eine Leistungsanpassung erforderlich macht, die eine sichere Überwachungsfunktion der 3D-Kamera nicht länger gewährleistet, so dass auch hier vorsichtshalber eine sicherheitsgerichtete Abschaltung erfolgt.

Die Beleuchtungseinheit weist bevorzugt eine Laserlichtquelle auf. Laserlichtquellen sind besonders lichtstark, und ihre Kohärenzeigenschaften lassen sich nutzen, um mit hohem Wirkungsgrad Strukturmuster auszubilden. So kann mit einem Mustererzeugungselement ein lichtstarkes strukturiertes Beleuchtungsmuster in den Überwachungsbereich projiziert werden. Auch bei alternativen Lichtquellen, wie beispielsweise LEDs, ist eine die Augen potentiell schädigende Ausgangsleistung möglich und daher die Erfindung einsetzbar, um Schutzvorschriften beispielsweise gemäß der hier relevanten Norm DIN 62471 zu erfüllen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer stereoskopischen 3D-Kamera;
- Fig. 2: eine beispielhafte funktionelle Darstellung jeweils in Abhängigkeit vom Abstand links des Durchmessers des Lichtflecks einer Laserquelle auf der Netzhaut, in der Mitte der Intensität der Laserquelle und rechts der auf der Netzhaut resultierenden Leistungsdichte;
- Fig. 3: eine schematische Darstellung des Beleuchtungsfeldes und des für das Auge gefährlichsten Punktes einer 3D-Kamera;
- Fig. 4: eine schematische Darstellung einer 3D-Kamera ähnlich Figur 3 mit Zusatzsensor;
- Fig. 5: eine schematische Darstellung, bei der sich in dem Beleuchtungsfeld der 3D-Kamera gemäß Figur 4 ein Objekt befindet; und
- Fig. 6: eine schematische Darstellung gemäß Figur 5, wobei nach Detektion des Objekts in gefährlicher Entfernung das Beleuchtungsfeld abgeschaltet ist; und
- Fig. 7: eine schematische Blockdarstellung eines Zusatzsensors zur Entfernungsmessung von Objekten in dem Beleuchtungsfeld.

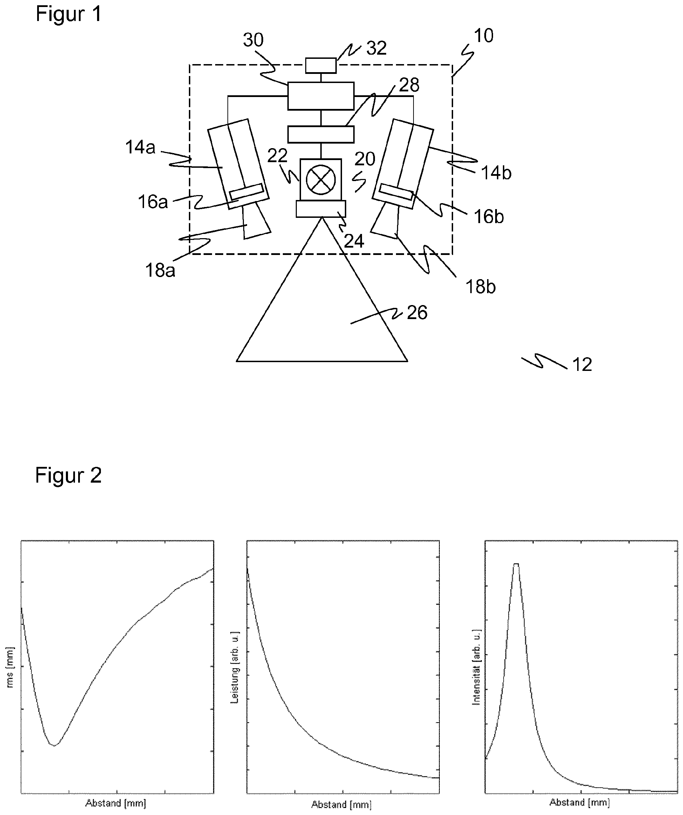

Figur 1 zeigt eine schematische Darstellung des allgemeinen Aufbaus einer 3D-Kamera 10 nach dem Stereoskopieprinzip zur Erfassung eines Raumbereichs 12. Die Erfindung umfasst aber auch andere Sensoren, insbesondere andere Kameras und 3D-Kameras wie die einleitend genannten Lichtlaufzeitkameras oder Kameras, die ein Projektionsmuster mit einem aufgenommenen Bild korrelieren.

Zwei Kameramodule 14a, 14b sind in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor, der möglicherweise als SPAD-Matrix ausgebildet ist. Den Bildsensoren 16a, 16b ist je ein Objektiv 18a, 18b mit einer abbildenden Optik zugeordnet.

In der Mitte zwischen den beiden Bildsensoren 16a, 16b ist eine Beleuchtungseinheit 20 vorgesehen, wobei diese räumliche Anordnung nur als Beispiel zu verstehen ist. Die Beleuchtungseinheit 20 weist eine Lichtquelle 22, beispielsweise einen oder mehrere Laser oder LED, sowie ein Mustererzeugungselement 24 auf, das beispielsweise als Maske, Phasenplatte, Mikrolinsenarray oder diffraktives optisches Element ausgebildet ist. Somit ist die Beleuchtungseinheit 20 in der Lage, den Raumbereich 12 mit einem Beleuchtungsfeld 26 auszuleuchten, das ein strukturiertes Muster aufweist. Eine Beleuchtungssteuerung 28 schaltet die Lichtquelle 22 und bestimmt deren Lichtleistung.

Mit den beiden Bildsensoren 16a, 16b und der Beleuchtungssteuerung 28 ist eine Steuerung 30 verbunden, welche Bilddaten der Bildsensoren 16a, 16b empfängt und daraus mit Hilfe einer stereoskopischen Disparitätsschätzung dreidimensionale Bilddaten (Entfernungsbild, Tiefenkarte) des Raumbereichs 12 berechnet. Das strukturierte Beleuchtungsmuster sorgt dabei für einen guten Kontrast und eine eindeutig zuordenbare Struktur jedes Bildelements in dem beleuchteten Raumbereich 12. Demnach ist das strukturierte Muster und damit das Mustererzeugungselement 24 für einen Sensor mit anderer Entfernungsmessung, etwa eine Lichtlaufzeitkamera, nicht erforderlich.

Je nach Anwendung der 3D-Kamera 10 werden die dreidimensionalen Bilddaten an einem Ausgang 32 ausgegeben oder intern weiter verarbeitet. Beispielsweise wird in sicherheitstechnischer Anwendung geprüft, ob sich Objekte in einem gefährlichen Bereich befinden, und gegebenenfalls wird ein sicherheitsgerichtetes Abschaltsignal an eine Gefahrenquelle ausgegeben. Dazu kann Ausgang 32 als Sicherheitsausgang ausgebildet sein (OSSD, Output Signal Switching Device). Ein in der Sicherheitstechnik eingesetzter Sensor ist fehlersicher ausgelegt. Für berührungslos wirkende Schutzeinrichtungen sind die entsprechenden Erfordernisse in der EN 61496-1 bzw. der IEC 61496 sowie in der DIN EN ISO 13849 und EN 61508 normiert. Eine entsprechende Norm für Sicherheitskameras befindet sich in der Vorbereitung.

Beim Betrieb eines optoelektronischen Sensors mit aktiver Beleuchtung, wie der 3D-Kamera 10, muss für ausreichenden Schutz vor elektromagnetischer Strahlung gesorgt werden. Die Schutzanforderungen werden am typischen Beispiel des Laser-Augenschutzes nach EN 60825 erläutert. Das Auge ist in aller Regel das empfindlichste Ziel, so dass andere denkbare Schutzanforderungen automatisch mit erfüllt werden. Dennoch sind auch andere Schutzziele, wie Hautschutz oder lediglich technische Gründe wie die Vermeidung von zu starkem Streulicht denkbar.

Zur Bewertung der Gefährdung und Einhaltung einer Laserklasse wie beispielsweise 1M müssen alle zugänglichen Abstände zwischen Auge und Ort der scheinbaren Quelle durchgespielt und im Hinblick auf die schädigende Leistungsdichte, d.h. das Verhältnis aus einfallender Leistung und Fläche des Netzhautbildes, bewertet werden. Relevant für die Klassifizierung der Lasereinrichtung ist der ungünstigste Abstand. Durch eine kleine Austrittspupille des Projektionsobjektives der Beleuchtungseinheit 20 bei großem Feldwinkel wirkt die Augenpupille als Feldblende und beschneidet das Bild der Quelle mit zunehmendem Abstand. Bei kurzen Abständen wird das Netzhautbild zunehmend größer, so dass sich die insgesamt steigende Lichtmenge innerhalb der als Messblende wirkenden Iris auf eine größere Netzhautfläche verteilt. Bei sehr großen Abständen hingegen wird zwar das Abbild der Quelle auf der Netzhaut sehr klein und damit die empfangene Strahlung sehr konzentriert, aber insgesamt fällt durch die hohe Divergenz der Beleuchtung sehr wenig Licht auf die Netzhaut. Die Gefährdung ist daher an einem zu bestimmenden Zwischenabstand maximal. Dieser ungünstigste oder gefährlichste Abstand ist für die Klassifizierung der Lasereinrichtung relevant.

Figur 2 illustriert, wie der gefährlichste Abstand aufgefunden werden kann. Das Auge wird als Hilfslinse modelliert, die einen Teil der Strahlung des Beleuchtungsfeldes 26 einfängt. Im linken Teil zeigt Figur 2 zunächst den Radius der durch die Hilfslinse auf der Netzhaut abgebildeten Laserquelle in Abhängigkeit vom Abstand zu der Laserquelle. Um dem variablen Akkommodationsvermögen des menschlichen Auges Rechnung zu tragen, werden für jeden Abstand zusätzlich Linsenbrennweiten zwischen f' = + 14.5 mm und f' = + 17 mm betrachtet. Die Minimalbrennweite von f' = + 14.5 mm entspricht dabei einer Gegenstandsweite von g = 100 mm, der Maximalwert f' = + 17 mm einer Gegenstandsweite von g = ∞.

Im mittleren Teil der Figur 2 ist der abstandsabhängige Intensitätsverlauf für eine Messblende des Durchmessers 7 mm entsprechend der Iris dargestellt. Im rechten Teil der Figur 2 ist die für Schädigungen des Auges maßgebliche Leistungsdichte auf der Netzhaut erneut in Abhängigkeit vom Abstand aufgetragen. Dazu wird die auf der Netzhaut auftreffende Leistung gemäß Figur 2 Mitte durch die Fläche des entstandenen Netzhautbildes entsprechend dem Radius gemäß Figur 2 links geteilt.

Wie Figur 2 rechts zu entnehmen, bildet die Leistungsdichte auf der Retina des Auges abhängig vom Beobachtungsabstand zur Gefahrenquelle ein scharfes Maximum aus. Für abweichende Abstände wäre die Gefährdung geringer. Alle Grenzwertbestimmungen für die Klasse 1M werden auf dieses für das menschliche Auge gefährlichste Szenario mit maximaler auf die Netzhaut eintreffenden Leistungsdichte durchgeführt.

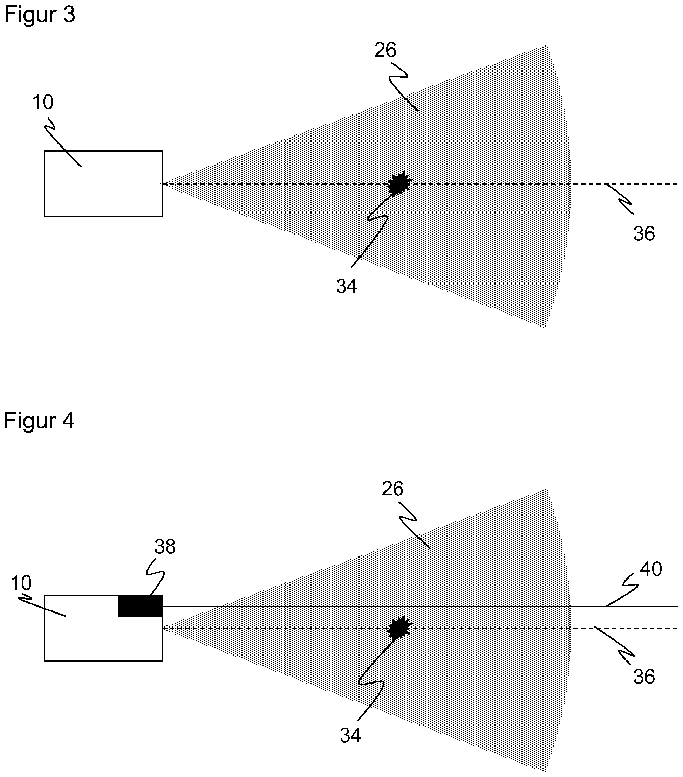

Figur 3 illustriert nochmals den gefährlichsten Bereich 34 in dem Beleuchtungsfeld 26. Die zu Figur 1 beispielhaft erläuterte 3D-Kamera 10 ist hier nur noch als Funktionsblock gezeigt. Das Auffinden des ungünstigsten Abstands auf der optischen Achse 36 wurde soeben beschrieben. Lateral, also in der Figur 3 nach oben oder unten, nimmt die Strahlungsleistung wegen des Randabfalls der Projektionsoptik nur ab.

Mit einer situativen Gefährdungsbeurteilung, die den Abstand zwischen einer tatsächlich anwesenden Person und der Lichtquelle 22 berücksichtigt, kann die jeweils zulässige Beleuchtungsleistung nachgeregelt werden, um eine stärkere Beleuchtung zu erreichen, die dennoch für jeden Abstand die geforderte Augenschutzklasse erfüllt.

Figur 4 zeigt eine Erweiterung der 3D-Kamera 10 um einen Zusatzsensor 38, der selbst ein entfernungsmessender optischer Sensor ist. Es ist eine elektrische Regelschaltung vorgesehen, beispielsweise innerhalb der Beleuchtungssteuerung 28, welche ein Überschreiten der für die 3D-Kamera 10 in Abhängigkeit von Anwendung und Gefährdungsklasse bestimmten Lichtleistungsgrenzwerte verhindert. Allerdings sind die Lichtleistungsgrenzwerte nicht statisch aufgrund von worst-case-Annahmen festgelegt, sondern werden situativ angepasst. Dazu wird mit dem Zusatzsensor 38 geprüft, ob sich überhaupt ein Objekt im Strahlengang 40 des Zusatzsensors 38 in dem gefährlichsten Bereich 34 befindet beziehungsweise der Abstand eines im Beleuchtungsfeld 26 erkannten Objekts zu dem gefährlichsten Bereich 34 bestimmt. So ist es möglich, die Beleuchtungseinheit 20 mit einer höheren Leistung zu betreiben, bei der die Grenzwerte des Augenschutzes in dem gefährlichsten Bereich 34 nicht mehr erfüllt sind. Das beeinträchtigt die Klassifikation nicht, weil die Zugänglichkeit über die aktive Sensorfunktion des Zusatzsensors 38 ausgeschlossen ist.

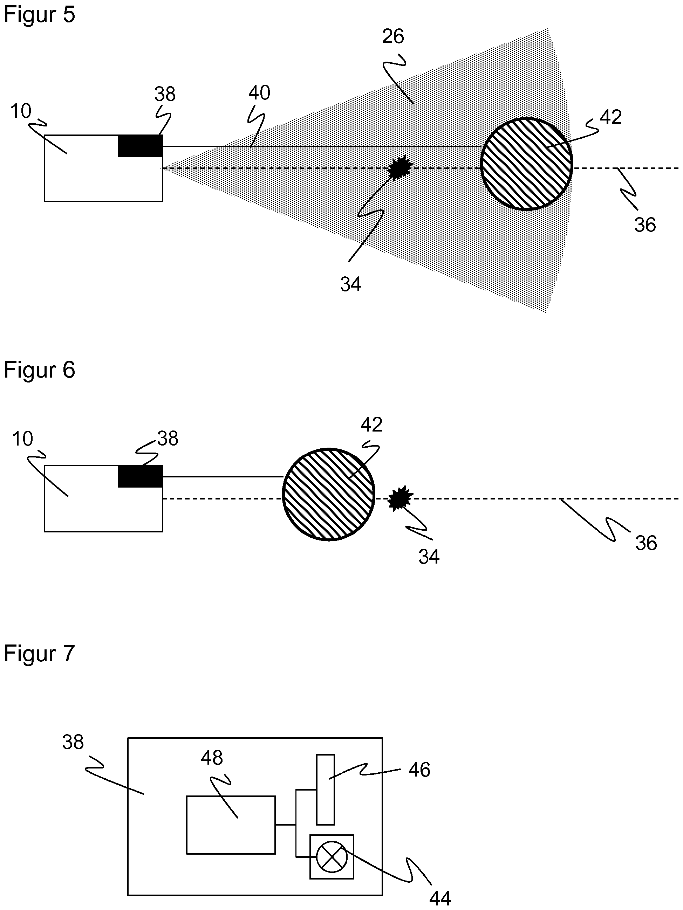

Figur 5 zeigt beispielhaft eine erste Situation mit einem Objekt 42 in größerer Entfernung, insbesondere jenseits des gefährlichsten Bereichs 34. Die 3D-Kamera 10 kann im Regelbetrieb verbleiben und je nach Abstand des Objekts 42 die Leistung der Beleuchtungseinheit 20 erhöhen.

Figur 6 zeigt eine weitere beispielhafte Situation mit einem Objekt 42 sehr nahe und vor dem gefährlichsten Bereich 34. Die Leistung der Beleuchtungseinheit 20 muss entsprechend gedrosselt werden. Dargestellt ist sogar eine besonders drastische Konsequenz: Das Beleuchtungsfeld 26 wird ganz abgeschaltet.

Wie an diesen beiden Beispielen illustriert, liefert also der Zusatzsensor 38 Entfernungswerte, die für eine Leistungsanpassung genutzt werden können. Die Entfernungswerte werden vorzugsweise relativ zu dem gefährlichsten Bereich 34 und kollinear beziehungsweise parallel zur Ausbreitungsrichtung der elektromagnetischen Strahlung des Beleuchtungsfeldes 26 gemessen. Außerdem erfolgt die Messung bevorzugt möglichst nahe an der optischen Achse 36 der Beleuchtungseinheit 20. Dadurch wird gewährleistet, dass die Messung in unmittelbarer Nähe zur Gefahr erfolgt, und beispielsweise kann auf diese Weise der Kopf eines Menschen detektiert werden, bevor das menschliche Auge der gefahrbringenden elektromagnetischen Strahlung ausgesetzt wird.

Abhängig von der gemessen Entfernung D zu einem detektierten Objekt werden dann neue Schwellwerte S(D) für die je nach Schutzklasse zulässigen Grenzwerte gesetzt. Die Abhängigkeit kann als kontinuierliche oder diskrete Funktion hinterlegt sein. Die Schwellwerte S(D) werden an die Regelungsschaltung übergeben, so dass der Schutz vor elektromagnetischer Strahlung stets gemäß einer aktuell herrschenden Gefährdungssituation gegeben ist. Bei der Schwellenwahl sollte die Latenzzeit des betroffenen Gesamtsystems aus Zusatzsensor 38, Beleuchtungssteuerung 28 und Beleuchtungseinheit 20 sowie die Verletzungszeit bei der Schwellenwahl beachtet werden.

Figur 7 zeigt in einer sehr schematischen Blockdarstellung einen beispielhaften Aufbau des Zusatzsensors 38. Die Entfernungsmessung erfolgt hier nach einem Lichtlaufzeitverfahren (TOF, time of flight), wobei andere Verfahren ebenso denkbar sind. Ein eigener Lichtsender 44 sendet ein Lichtsignal aus, das nach Remission an einem Objekt von einem Lichtempfänger 46 registriert wird, vorzugsweise einem empfindlichen und kompakten SPAD-Lichtempfänger. Das Lichtsignal ist moduliert, entweder mit kurzen Lichtpulsen oder einem periodischen Signal, und in einer Lichtlaufzeiteinheit 48 wird dementsprechend das Zeitintervall zwischen Aussenden und Empfangen eines Pulses oder ein Phasenversatz bestimmt und über die konstante Lichtgeschwindigkeit in eine Entfernung umgerechnet.

Der Lichtsender 44 ist vorzugsweise augensicher. Dadurch bleibt die Reichweite beschränkt und kann auch geringer sein als diejenige des Beleuchtungsfeldes 26. Dies hat allenfalls für eine Beleuchtungseinheit 20 mit kollimierter Strahlung Einfluss, die für eine 3D-Kamera 10 nicht sinnvoll wäre. Für divergente Strahlung, die typischerweise von der Beleuchtungseinheit 20 erzeugt wird, weil regelmäßig Flächen beleuchtet werden, genügt es, wenn sich der gefährlichste Bereich 34 gegebenenfalls mit einem gewissen Puffer innerhalb der Reichweite befindet. Der Lichtsender 44 ist bevorzugt von dem Beleuchtungsfeld 26 beispielsweise zeitlich, durch Codierung oder Wellenlänge getrennt, um die dreidimensionalen Bilddaten nicht zu verfälschen. Es ist auch denkbar, dass der Zusatzsensor 38 deaktiviert wird, sobald die 3D-Kamera 10 sich im Regelbetrieb befindet, und dann seine Funktion durch Auswertung der Bilddaten zu ersetzen. Es hat Vorteile, den Lichtsender 44 als Punktstrahler auszulegen, da dieser Strahlquerschnitt die höchste Entfernungsmessgenauigkeit verspricht. Allerdings kann mit einem ausgedehnten Lichtfleck, etwa in Linien- oder Ringform, ein größerer Anteil des Beleuchtungsfeldes 26 abgedeckt werden. Dieser Effekt lässt sich auch durch Einsatz mehrerer Zusatzsensoren 38 erreichen.

Es ist möglich, mit Status-LEDs anzuzeigen, ob die Beleuchtungseinheit 20 in einem Modus mit einer bestimmten durchschnittlichen optischen Strahlungsleistung betrieben wird. Der Zusatzsensor 38 kann integraler Bestandteil der Beleuchtungseinheit 20 oder der 3D-Kamera 10 sein oder nachgerüstet werden. Die erfindungsgemäße Leistungsanpassung mit Hilfe eines entfernungsmessenden Zusatzsensors 38 ist nicht nur in einem Sensor nützlich, speziell einer 3D-Kamera 10, sondern beispielsweise auch in einer Lasereinrichtung der Wissenschaft, einem Industrielaser zum Schneiden oder Schweißen oder in der Telekommunikation. Damit kann beispielsweise ein Justagebetrieb mit wenig Leistung und ein Regelbetrieb mit hoher Leistung gesteuert werden.

## Patentansprüche

1. Optoelektronischer Sensor (10), insbesondere 3D-Kamera, zur Erfassung eines Überwachungsbereichs (12), wobei der Sensor (10) einen Bildsensor (16a-b), eine Beleuchtungseinheit (20), um den Überwachungsbereich (12) zumindest teilweise mit einem Beleuchtungsfeld (26) zu beleuchten, und eine Beleuchtungssteuerung (28) aufweist, die für eine Leistungsanpassung der Beleuchtungseinheit (20) zur Einhaltung von Schutzanforderungen ausgebildet ist,
**dadurch gekennzeichnet,**
**dass** der Sensor (10) weiterhin einen entfernungsmessenden optoelektronischen Zusatzsensor (38) aufweist, der prüft, in welcher Entfernung sich ein Objekt (42) in dem Beleuchtungsfeld (26) befindet, und dass die Beleuchtungssteuerung (28) die Leistungsanpassung in Abhängigkeit der von dem Zusatzsensor (38) gemessenen Entfernung vornimmt.

2. Sensor (10) nach Anspruch 1,
wobei das Beleuchtungsfeld (26) einen Bereich (34) aufweist, in dem ein Auge mit maximaler Leistungsdichte getroffen wird, und wobei der Zusatzsensor (38) die Entfernung relativ zu dem Bereich (34) misst.

3. Sensor (10) nach Anspruch 1 oder 2,
wobei die Leistungsanpassung entsprechend einem zulässigen Höchstwert erfolgt.

4. Sensor (10) nach Anspruch 3,
wobei der Höchstwert an die gemessene Entfernung angepasst ist.

5. Sensor (10) nach einem der vorhergehenden Ansprüche,
wobei die Beleuchtungssteuerung (28) dafür ausgebildet ist, die Beleuchtungseinheit (20) gepulst zu betreiben und die Leistungsanpassung über die Pulswiederholfrequenz, die Pulslänge und/oder die Pulsamplitude zu steuern.

6. Sensor (10) nach einem der vorhergehenden Ansprüche,
wobei der Zusatzsensor (38) einen SPAD-Lichtempfänger (46) aufweist.

7. Sensor (10) nach einem der vorhergehenden Ansprüche,
wobei der Zusatzsensor (38) eine eigene Beleuchtungseinheit (44) aufweist.

8. Sensor (10) nach Anspruch 7,
wobei die eigene Beleuchtungseinheit (44) einen ausgedehnten ring- oder linienförmigen Strahlquerschnitt aufweist.

9. Sensor (10) nach einem der vorhergehenden Ansprüche,
wobei mehrere Zusatzsensoren (38) vorgesehen sind.

10. Verfahren zur optischen Erfassung eines Überwachungsbereichs (12), der zumindest teilweise durch eine Beleuchtungseinheit (20) mit einem Beleuchtungsfeld (26) beleuchtet wird, wobei zur Einhaltung von Schutzanforderungen eine Leistungsanpassung der Beleuchtungseinheit (20) erfolgt,
**dadurch gekennzeichnet,**
**dass** mit einem entfernungsmessenden optoelektronischen Zusatzsensor (38) geprüft wird, in welcher Entfernung sich ein Objekt (42) in dem Beleuchtungsfeld (26) befindet, und die Leistungsanpassung in Abhängigkeit der von dem Zusatzsensor (38) gemessenen Entfernung vorgenommen wird.
